# EUROPEAN PATENT APPLICATION

(11) **EP 4 556 881 A1**
(43) Date of publication of application: **21.05.2025**
(21) Application number: 23839249.2
(22) Date of filing: 28.03.2023
(51) Int. Cl.: G01M 99/00, B29C 48/25, B29C 48/30, B29C 48/395, B29C 48/92

(54) **INFERENCE METHOD, INFERENCE DEVICE, AND COMPUTER PROGRAM**

(30) Priority: 11.07.2022 JP 2022111275
(71) Applicant: The Japan Steel Works, Ltd., Tokyo 141-0032 (JP)
(72) Inventor: OKIMOTO, Tasuku, Tokyo 141-0032 (JP); SUZUKI, Jun, Tokyo 141-0032 (JP); FUROKAWA, Mikio, Tokyo 141-0032 (JP)
(74) Representative: Simmons & Simmons LLP (Munich)
(86) International application number: PCT/JP2023/012413
(87) International publication number: WO 2024/014070

(57) **Abstract**

The present invention involves: acquiring physical quantity data relating to the state of a member that constitutes a molding machine; preparing a plurality of inference models for inferring, by different algorithms, the lifetime or abnormality degree of the member or the quality of a molded article; inferring, by using at least one of the inference models selected from the plurality of inference models, the lifetime or abnormality degree of the member or the quality of a molded article on the basis of the acquired physical quantity data.

## Description

### Technical Field

The present invention relates to an estimation method, an estimation device and a computer program.

### Background Art

Patent Literature 1 discloses a life prediction device that predicts the life of a rotating component or the like in an injection molding machine or the like. The life prediction device of Patent Literature 1 accumulates the number of rotations of the rotating component rotated by a drive motor, and calculates the fatigue life of the rotating component from the accumulated numbers of rotations and the torque required to rotate the rotating component.

Patent Literature 2 discloses an abnormality detection device, which is provided with a vibration sensor for detecting the vibration of a ball screw installed in an injection molding machine, that detects an abnormality of the ball screw by analyzing the vibration intensity detected by the vibration sensor.

### Citation List

### Patent Literature

Patent Literature 1: Japanese Patent Application Laid-Open Publication No. h6-91683
Patent Literature 2: Japanese Patent Application Laid-Open Publication No. 2021-74917

### Summary of Invention

### Technical Problems

By collecting physical quantity data related to the condition of a component constituting a molding machine and performing machine learning, predicting the life of the component is conceivable.

Although various life prediction models that can be used to predict the life of a component constituting a molding machine are conceivable, determining one optimal life prediction model and collecting enough data for training the model are not necessarily easy. A similar problem occurs when the degree of abnormality of a component constituting the molding machine or the quality of a molding product are estimated.

An object of the present disclosure is to provide an estimation method, an estimation device and a computer program capable of performing machine learning for estimating the life or the degree of abnormality of a component constituting a molding machine or the quality of a molding product regardless of the data amount that can be collected for estimating the life and the like and of estimating the life or the degree of abnormality of the component or the quality of a molding product. Solution to Problems

An estimation method according to the present disclosure comprises: acquiring physical quantity data related to a condition of a component constituting a molding machine; preparing a plurality of estimation models that each estimate a life or an abnormality degree of the component, or quality of a molding product using different algorithms; and estimating a life or an abnormality degree of the component, or quality of a molding product based on the acquired physical quantity data by using one or more of the estimation models selected from the plurality of estimation models.

An estimation device according to one aspect of the present disclosure, comprises: an acquisition unit that acquires physical quantity data related to a condition of a component constituting a molding machine; a plurality of estimation models that each estimate a life or an abnormality degree of the component, or quality of a molding product using different algorithms; and a processing unit that estimates a life or an abnormality degree of the component, or quality of a molding product based on the physical quantity data acquired by the acquisition unit by using one or more of the estimation models selected from the plurality of estimation models.

A computer program (computer program product) causes a computer to execute processing of: acquiring physical quantity data related to a condition of a component constituting a molding machine; and estimating a life or an abnormality degree of the component, or quality of a molding product based on the acquired physical quantity data by using one or more estimation models selected from a plurality of estimation models that estimate a life or an abnormality degree of the component, or quality of a molding product using different algorithms.

### Advantageous Effects of Invention

According to the present disclosure, it is possible to perform machine learning for estimating the life or the degree of abnormality of a component constituting a molding machine or the quality of a molding product regardless of the data amount that can be collected for estimating the life and the like and to predict the life of the component.

### Brief Description of Drawings

FIG. 1 is a block diagram depicting an example of the configuration of a molding machine system according to a present embodiment.
FIG. 2 is a schematic view depicting an example of the configuration of a molding machine 1 according to the present embodiment.
FIG. 3 is a block diagram depicting an example of the configuration of a data collection device 3 according to the present embodiment.
FIG. 4 is a block diagram depicting an example of the configuration of a life prediction device according to the present embodiment.
FIG. 5 is a conceptual diagram depicting an example of a record layout of a collection data DB.
FIG. 6 is a conceptual diagram depicting an example of a record layout of a model construction DB.
FIG. 7 is a flowchart depicting a learning processing procedure for life prediction models.
FIG. 8 is a conceptual diagram depicting a first life prediction model.
FIG. 9 is a flowchart depicting a learning processing procedure for the first life prediction model.
FIG. 10A is a graph depicting a learning result of the first life prediction model.
FIG. 10B is a graph depicting an inference result using the first life prediction model.
FIG. 11 is a conceptual diagram depicting a second life prediction model.
FIG. 12 is a flowchart depicting a learning processing procedure for the second life prediction model.
FIG. 13A is a graph depicting a learning result of the second life prediction model.
FIG. 13B is a graph depicting an inference result using the second life prediction model.
FIG. 14 is a conceptual diagram of a third life prediction model.
FIG. 15 is a flowchart depicting a learning processing procedure for the third life prediction model.
FIG. 16A is a graph depicting a learning result of the third life prediction model.
FIG. 16B is a graph depicting an inference result using the third life prediction model.
FIG. 17 is a flowchart depicting a processing procedure for life prediction.
FIG. 18 is a flowchart depicting a processing procedure for life prediction.
FIG. 19 is a schematic diagram depicting one example of a remaining life estimation result display screen displayed on a portal site.
FIG. 20 is a schematic diagram depicting one example of a dashboard screen displayed on the portal site.
FIG. 21 is a schematic diagram depicting an example of a search display screen displayed on the portal site.
FIG. 22 is a schematic diagram depicting an example of a monthly report screen displayed on the portal site.

### Description of Embodiments

An estimation method, a life prediction device and a computer program according to an embodiment of the present disclosure will be described below with reference to the drawings. It should be noted that the present disclosure is not limited to these examples, and is indicated by the scope of claims, and is intended to include all modifications within the meaning and scope equivalent to the scope of claims. Furthermore, at least part of the following embodiments may arbitrarily be combined.

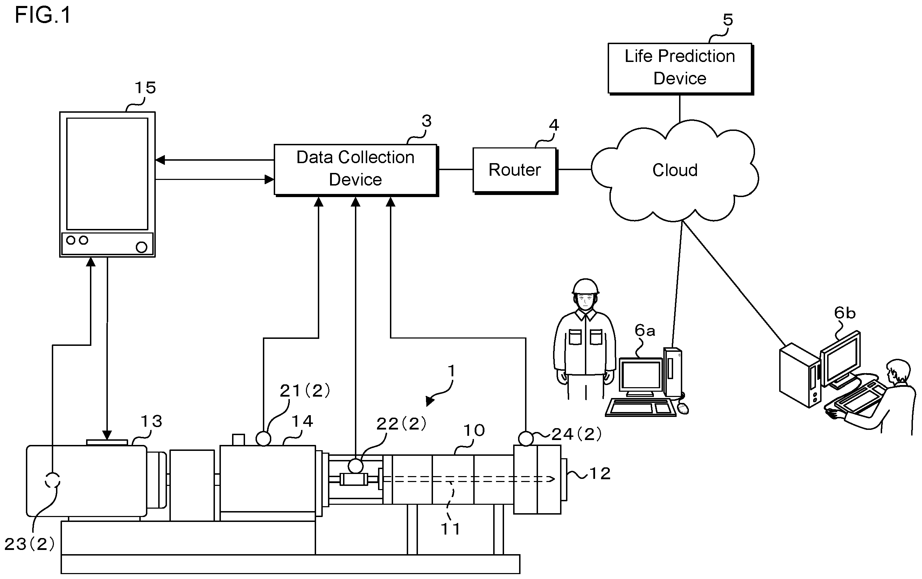

FIG. 1 is a block diagram depicting an example of the configuration of a molding machine system according to the present embodiment. The molding machine system is provided with a molding machine 1, multiple sensors 2, a data collection device 3, a router 4, a life prediction device 5 and terminal devices 6a, 6b. The molding machine 1 includes an injection molding machine and an extruder. The following description will be given below on the assumption that the molding machine 1 is an extruder as an example.

While one molding machine 1 and one data collection device 3 are depicted in FIG. 1, multiple data collection devices 3 (not illustrated) are connected to the life prediction device 5 through networks. The data collection device 3 is connected to one or more molding machines 1. The life prediction device 5 can collect information on the multiple molding machines 1 and predict the remaining life of one or more components constituting each of the molding machines 1. The multiple molding machines 1 and the data collection devices 3 are assumed to be respectively installed in the factories of multiple users who possess the molding machines 1. The user is an organization such as a cooperation or the like that possesses the molding machine 1, not an operator.

The terminal devices 6a, 6b are communication terminals with a display portion such as a computer, a tablet terminal and a smartphone. The terminal device 6a is a terminal to be used by the user. The terminal device 6b is a terminal to be used by a service representative such as a sales representative or a maintenance manager who is associated with the molding machine 1 of the user.

### <Molding Machine 1>

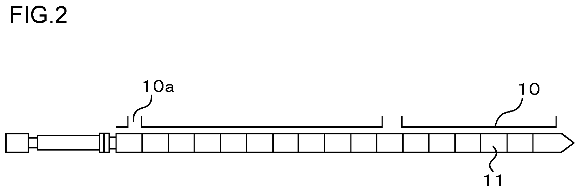

FIG. 2 is a schematic view depicting an example of the configuration of the molding machine 1 according to the present embodiment. The molding machine 1 is provided with a cylinder 10 with a hopper 10a through which a resin raw material is input, two screws 11 and a die 12 (see FIG. 1) that is disposed at the outlet of the cylinder 10. The two screws 11 are arranged substantially parallel with each other in mesh and are rotatably inserted into a hole of the cylinder 10. The two screws 11 carry the resin raw material put into the hopper 10a in the direction of extrusion (to the right in FIG. 1 and FIG. 2), and melt and knead the resin raw material. The molten resin raw material is discharged from the die 12 with a through hole.

For the screw 11, multiple types of screw pieces are combined and integrated into one bar of screw 11. For example, the screw 11 is configured by arranging and combining a flight screw-shaped forward flight piece that carries a resin raw material in a forward direction, a reverse flight piece that carries a resin raw material in a reverse direction, a kneading piece that kneads a resin raw material and the like, in an order and at positions according to the characteristics of the resin raw material.

The molding machine 1 is further provided with a motor 13 that outputs driving force for rotating the screw 11, a reduction gear 14 that reduces the transmission speed of the driving force from the motor 13 and a control device 15. The screw 11 is coupled to an output shaft of the reduction gear 14. The screw 11 is rotated by the driving force of the motor 13 that is reduced in transmission speed by the reduction gear 14.

### <Sensor 2>

A sensor 2 detects physical quantities related to the condition of a component constituting the molding machine 1, and directly or indirectly outputs the detected and obtained physical quantity data to the data collection device 3. The physical quantity data is data of time-series sensor values indicating the detected physical quantities. The sensor 2 includes sensors provided on the molding machine 1 as requisites for controlling the operation of the molding machine 1 and sensors provided for estimating the life of a component. A part of the multiple sensors 2 are connected to the data collection device 3, so that the data collection device 3 acquires physical quantity data from the sensors 2. Another part of the multiple sensors 2 are connected to the control device 15, so that the data collection device 3 acquires physical quantity data from the sensors 2 via the control device 15.

The physical quantities include temperature, position, velocity, acceleration, current, voltage, pressure, time, image data, torque, force, distortion, power consumption, weight and the like. These physical quantities can be measured with a thermometer, a position sensor, a speed sensor, an accelerometer, an ammeter, a voltmeter, a pressure gauge, a timer, a camera, a torque sensor, a wattmeter, a weightometer and the like.

The multiple sensors 2 include, for example, a first sensor 21 that detects a physical quantity related to the reduction gear 14, a second sensor 22 that detects a physical quantity related to the screws 11, a third sensor 23 that detects a physical quantity related to the motor 13 and a fourth sensor 24 that detects a physical quantity related to the die 12.

The first sensor 21 is a vibration detector or the like that detects the vibration of the reduction gear 14, for example. The second sensor 22 includes a torque detector that detects a shaft torque of the screw 11, a tachometer that detects a rotational speed of the screw 11, a manometter that detects the screw tip pressure, a thermometer that detects a temperature of the screw 11and a displacement sensor that detects a displacement of the rotation center of the screw 11. The third sensor 23 includes an ammeter that detects a current of the motor and a tachometer that detects a rotational speed of the motor. The fourth sensor 24 is a manometer that detects a die head pressure acting on the die 12.

### <Control Device 15>

The control device 15 is a computer controlling the operation of the molding machine 1 and has a display unit and a transmission/reception unit (not illustrated) that transmits and receives information to and from the data collection device 3.

More specifically, the control device 15 transmits operating data indicating the operating state of the molding machine 1 to the data collection device 3. The operating data includes, for example, a motor current, a rotational speed of the screw 11, a tip pressure of the screw 11, a die head pressure, a feeder supply amount (supply amount of a resin raw material), an extrusion output, a cylinder temperature and a resin pressure.

The control device 15 receives various graph data and remaining life data indicating the remaining life of a component constituting the molding machine 1 that are transmitted from the data collection device 3. The control device 15 displays the contents of the received graph data and remaining life data. In addition, the control device 15 outputs a warning according to the remaining life indicated by the received remaining life data.

### <Data Collection Device 3 >

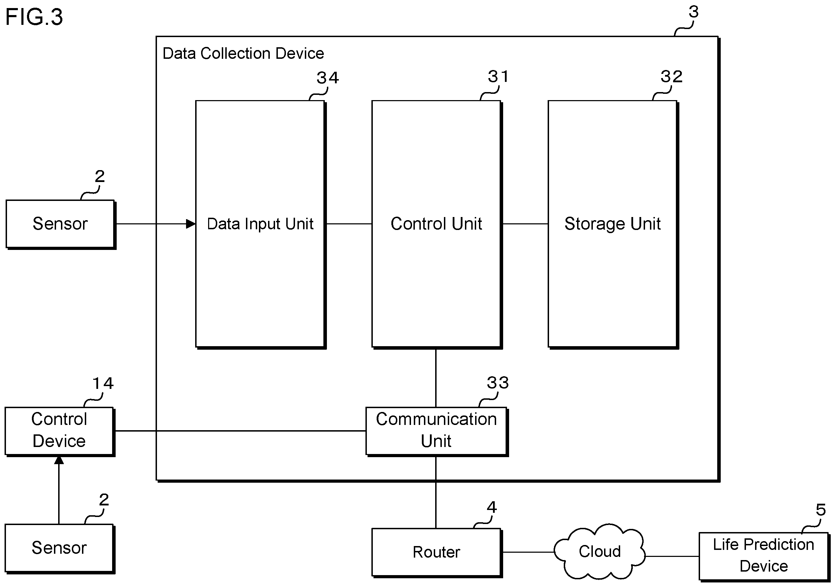

FIG. 3 is a block diagram depicting an example of the configuration of the data collection device 3 according to the present embodiment. The data collection device 3 is a computer and is provided with a control unit 31, a storage unit 32, a communication unit 33 and a data input unit 34. The storage unit 32, the communication unit 33 and the data input unit 34 are connected to the control unit 31. The data collection device 3 is a Programmable Logic Controller (PLC), for example.

The control unit 31 includes an arithmetic processing circuit such as a CPU (Central Processing Unit), a multi-core CPU, an Application Specific Integrated Circuit (ASIC) or a Field-Programmable Gate Array (FPGA), an internal storage device such as a ROM (Read Only Memory), a RAM (Random Access Memory), an I/O terminal and the like. The control unit 31 executes a control program stored in the storage unit 32, which will be described later, to perform processing of collecting physical quantity data and transmitting it to the life prediction device 5. Note that each functional part of the data collection device 3 may be realized in software, or some or all of the functional parts may be realized in hardware.

The storage unit 32 is a nonvolatile memory such as a hard disk, an EEPROM (Electrically Erasable Programmable ROM) or a flash memory. The storage unit 32 stores a control program for causing the computer to execute processing of collecting physical quantity data.

The communication unit 33 is a communication circuit that transmits and receives information according to a predetermined communication protocol such as the Ethernet (registered trademark). The communication unit 33 is connected to the control device 15 over a first communication network such as LAN or the like, so that the control unit 31 can transmit and receive various information to and from the control device 15 via the communication unit 33. The control unit 31 acquires physical quantity data via the communication unit 33.

The first network is connected to a router 4, and the communication unit 33 is connected to the life prediction device 5 on the cloud, which is a second communication network. The control unit 31 can transmit and receive various information to and from the life prediction device 5 via the communication unit 33 and the router 4.

The data input unit 34 is an input interface to which signals output from the sensors 2 are input. The data input unit 34 is connected to the sensors 2, so that the control unit 31 acquires physical quantity data via the data input unit 34.

### <Life Prediction Device 5>

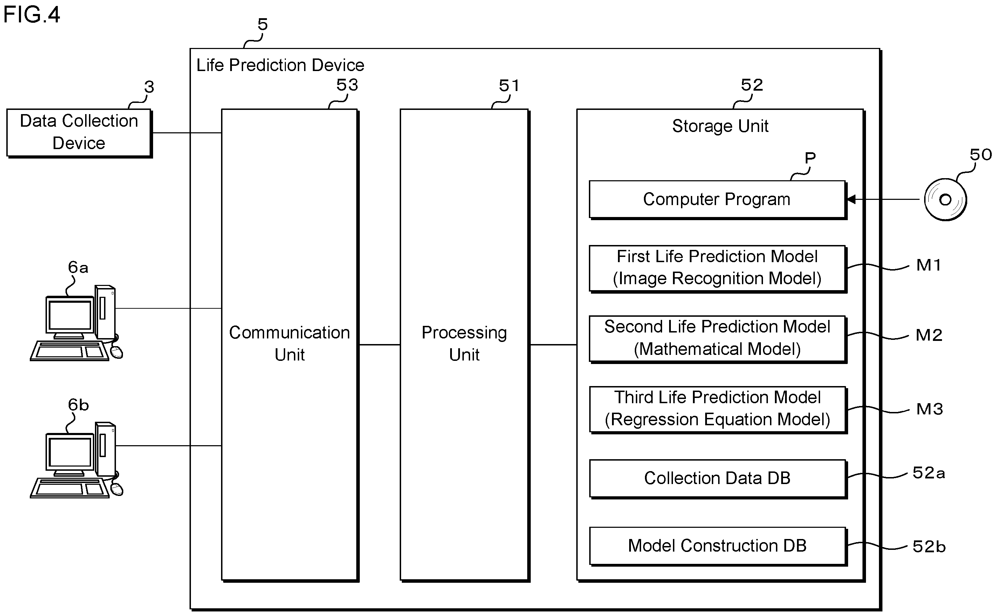

FIG. 4 is a block diagram depicting an example of the configuration of the life prediction device 5 according to the present embodiment. The life prediction device 5 is a computer, and is provided with a processing unit 51, a storage unit 52 and a communication unit 53. The storage unit 52 and the communication unit 53 are connected to the processing unit 51.

The processing unit 51, which is a processor, includes an arithmetic processing circuit such as a CPU, a multi-core CPU, a GPU (Graphics Processing Unit), a General-Purpose Computing on Graphics Processing Units (GPGPU), a Tensor Processing Unit (TPU), an ASIC, an FPGA or a Neural Processing Unit (NPU), an internal storage such as a ROM or a RAM, and an I/O terminal. The processing unit 51 functions as the life prediction device 5 according to the present embodiment by executing a computer program P (computer program product) stored in the storage unit 52, which will be described later. Note that each functional part of the life prediction device 5 may be realized in software, or some or all of the functional parts may be realized in hardware.

The communication unit 53 is a communication circuit that transmits and receives information according to a predetermined communication protocol such as the Ethernet (registered trademark). The communication unit 53 is connected to the data collection device 3 and the terminal devices 6a, 6b over the second communication network, so that the control unit 31 can transmit and receive various information to and from the data collection device 3 and the terminal devices 6a, 6b via the communication unit 53.

The storage unit 52 is a nonvolatile memory such as a hard disk, an EEPROM (Electrically Erasable Programmable ROM) or a flash memory. The storage unit 52 stores a first life prediction model M1, a second life prediction model M2, a third life prediction model M3, a collection data DB 52a and a model construction DB 52b as well as the computer program P for causing the computer to implement the processing of estimating the life of a component constituting the molding machine 1.

The computer program P or the like may be recorded on a recording medium 50 so as to be readable by the computer. The storage unit 52 stores the computer program P or the like read from the recording medium 50 by a reader (not illustrated). The recording medium 50 is a semiconductor memory such as a flash memory. Furthermore, the recording medium 50 may be an optical disc such as a CD (Compact Disc)-ROM, a DVD (Digital Versatile Disc)-ROM, or a BD (Blu-ray (registered trademark) Disc). Moreover, the recording medium 50 may be a magnetic disk such as a flexible disk or a hard disk, or a magneto-optical disk. In addition, the computer program P or the like may be downloaded from an external server (not illustrated) connected to a communication network (not illustrated) and may be stored in the storage unit 52.

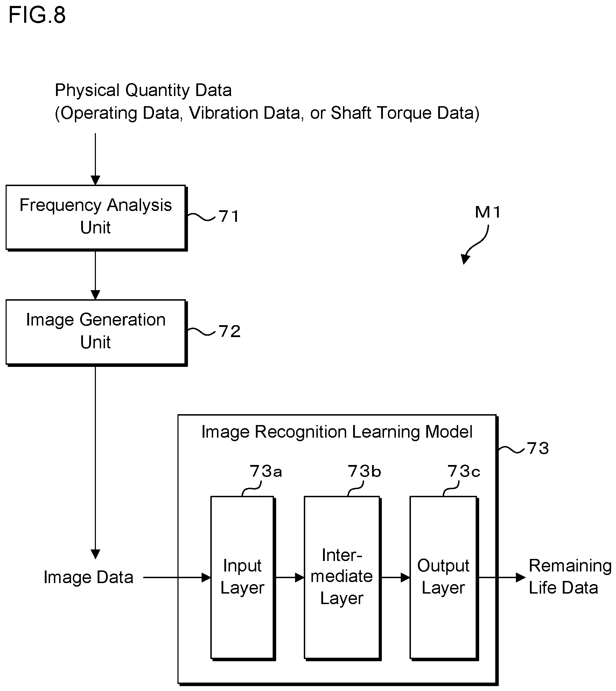

The first life prediction model M1 includes an image recognition learning model 73 that outputs data indicating the remaining life of a component constituting the molding machine 1 if image data generated from the physical quantity data is input (see FIG. 8). The image recognition learning model 73 has a CNN (Convolutional Neural Network), for example. The image recognition learning model 73 for the first life prediction model M1, which is stored in advance in the storage unit 52, is an existing pre-trained learning model. The processing unit 51 transfer-trains or fine-tunes the existing pre-trained model to generate a learning model specific for predicting the remaining life of a specific molding machine 1 and its component.

Note that the learning model and the life prediction model that are transfer-trained or fine-tuned is performed are also respectively referred to as the image recognition learning model 73 and the first life prediction model M1 for the sake of convenience.

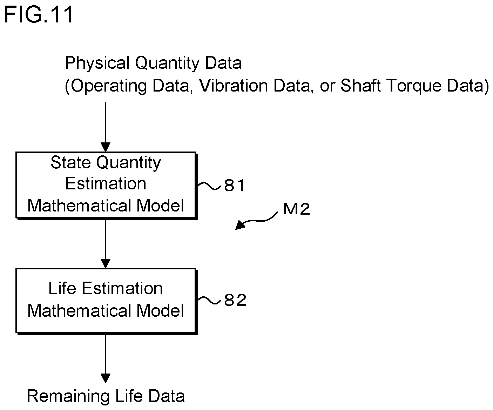

The second life prediction model M2 includes one or more state quantity estimation mathematical models 81 indicating the relationship between physical quantity data indicating multiple types of physical quantities that can be detected by the sensors 2 and state quantities other than the physical quantities, and a life estimation mathematical model 82 (see FIG. 11). The state quantity estimation mathematical model 81 for the second life prediction model M2, which is stored in advance in the storage unit 52, is an existing mathematical model. The coefficients that define the state quantity estimation mathematical model 81 are tuned in advance using a molding machine for testing or the like. The life estimation mathematical model 82 may also preferably be roughly adjusted in advance using a molding machine for testing. The processing unit 51 transfer-trains or fine-tunes the state quantity estimation mathematical model 81 and the life estimation mathematical model 82 to generate mathematical models specific for prediction of the remaining life of a specific molding machine 1 and its component.

Note that the transfer-trained or fine-tuned mathematical models and the life prediction model are also referred to as the state quantity estimation mathematical model 81, the life estimation mathematical model 82 and the second life prediction model M2 for the sake of convenience.

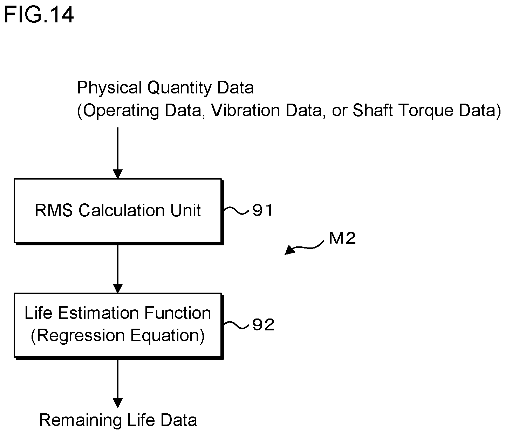

The third life prediction model M3 includes a life estimation function (regression equation) 92 having one or more explanatory variables and indicating the relationship between the physical quantity data and the remaining life of a component constituting the molding machine 1 (see FIG. 14). The coefficients that define the life estimation function 92 may preferably be roughly tuned in advance using a molding machine for testing or the like. The processing unit 51 transfer-trains or fine-tunes the life estimation function 92 to generate an estimation function specific for predicting the remaining life of a specific molding machine 1 and its component.

Note that the transfer-trained or fine-tuned estimation function and life prediction model are also referred to as the life estimation function 92 and the third life prediction model M3 for the sake of convenience.

The first life prediction model M1 is a model that predicts the life of a component constituting the molding machine 1 based on the time-series physical quantity data obtained by measurement for a short time period, while the second life prediction model M2 and the third life prediction model M3 are models that predict the life of a component constituting the molding machine 1 based on the time-series physical quantity data obtained by measurement for a long time period. It is natural that the first to third life prediction models M1, M2 and M3 may be configured to predict the life of a component constituting the molding machine 1 based on the time-series physical quantity data obtained by measurements during the same period. The time interval for measuring the physical data used for life prediction of a component constituting the molding machine 1 may be set for each life prediction model.

The first to third life prediction models M1, M2 and M3 are examples of the models for predicting the life of a component of the molding machine 1 according to different algorithms, and the number of the life prediction models is not limited to three life prediction models. In addition, the type of the life prediction models is not particularly limited to the ones described above.

For example, the first to third life prediction models M1, M2 and M 3 may be constructed by using Multilayer perceptron (MLP), Convolutional Neural Network (CNN), Graph Neural Network (GNN), Graph Convolutional Network (GCN), Recurrent Neural Network (RNN), Long Short Term Memory (LSTM), or other neural network models. The first life prediction model M1 may also be constructed by using an algorithm such as decision trees, random forests, Support Vector Machine (SVM) or the like.

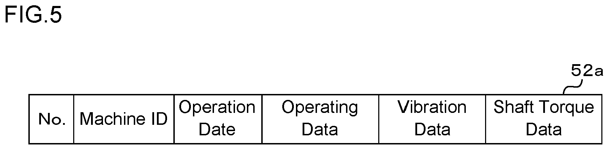

FIG. 5 is a conceptual diagram indicating an example of a record layout of the collection data DB 52a. The collection data DB 52a, which is provided with a hard disk and DBMS (database management system), stores various physical quantity data collected from the molding machine 1. For example, the collection data DB 52a has a "No." (record number) column, a "machine ID" column, an "operation date" column, a "vibration data" column and a "shaft torque" column.

The "machine ID" column stores a machine identifier of the molding machine 1. The "operation date" column stores information indicating the year, month, date or the like when various data stored as records were acquired. The "operating data" column stores time-series physical quantities indicating the operating state of the molding machine 1 such as motor current, a rotational speed of the screw 11, a tip end pressure of the screw 11, a die head pressure, a feeder supply amount (supply amount of resin row material), an extruder output, a cylinder temperature, a resin pressure and the like. The "vibration data" column stores vibration data as time-series physical quantity data. The "shaft torque data" column stores torque data of the screw 11 as time-series physical quantity data.

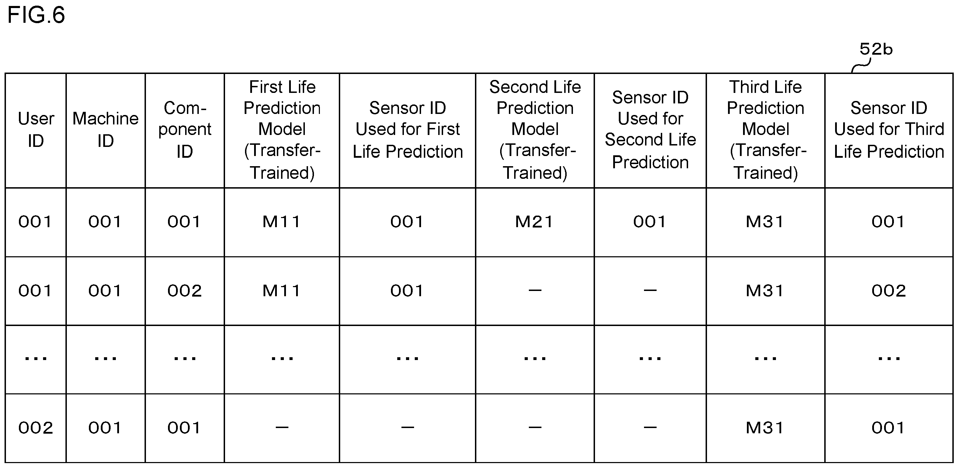

FIG. 6 is a conceptual diagram depicting an example of a record layout of the model construction DB 52b. The model construction DB 52b, which is provided with a hard disk and DBMS (database management system), stores coefficients of each of the various life prediction models used for predicting the life of a component constituting the molding machine 1. For example, the model construction DB 52b has a "user ID" column, a "machine ID" column, a "component ID" column, a "first life prediction model" column, a "sensor ID used for first life prediction" column, a "second life prediction model" column, a "sensor ID used for second life prediction" column, a "third life prediction model" column, and a "sensor ID used for third life prediction" column.

The "user ID" column stores an identifier of the user of the molding machine 1. The "machine ID" column stores a machine identifier of the molding machine 1. The "component ID" column stores a component identifier of the component constituting the molding machine 1 for which the remaining life is to be predicted.

The "first life prediction model" column stores the transfer-trained or fine-tuned first life prediction model M1 for predicting the remaining life of the component of the molding machine 1 indicated by the machine ID and the component ID. The "first life prediction model" column stores, for example, the weight coefficients and various parameters of the image recognition learning model 73. The "sensor ID used for first life prediction" column stores the identifier of the sensor 2 used for predicting the remaining life of the component using the first life prediction model M1. In other words, the type of the physical quantity data used for predicting the remaining life of the component is stored. For example, the identifier of the sensor 2 for detecting motor current, the identifier of the sensor 2 for detecting vibrations of the reduction gear 14 and the identifier of the sensor 2 for detecting a shaft torque of the screw 11 are stored.

The "second life prediction model" column stores the transfer-trained or fine-tuned second life prediction model M2 for predicting the remaining life of the component of the molding machine 1 indicated by the machine ID and the component ID. The "second life prediction model" column stores, for example, the weight coefficients and various parameters of the state quantity estimation mathematical model 81 and the life estimation mathematical model 82. The "sensor ID used for second life prediction" column stores the identifier of the sensor 2 used for predicting the remaining life of the component using the second life prediction model M2.

The "third life prediction model" column stores the transfer-trained or fine-tuned third life prediction model M3 for predicting the remaining life of the component of the molding machine 1 indicated by the machine ID and the component ID. The "third life prediction model" column stores, for example, the coefficients of the life estimation function 92. The "sensor ID used for third life prediction" column stores the identifier of the sensor 2 used for predicting the remaining life of the component using the third life prediction model M3.

As depicted in FIG. 6, when the remaining life of a component is predicted, the remaining life can be predicted from physical quantity data obtained with different sensors 2 using different life prediction models. For example, when the remaining life of the reduction gear 14 is predicted, the first life prediction model M1 is used to calculate the remaining life based on the physical quantity data on a first part obtained with the first sensor 21, and the second life prediction model M2 or the third life prediction model M3 is used to calculate the remaining life based on the physical quantity data on a second part obtained with the second sensor 22. The average or the like of the calculated remaining lives may then be calculated. The physical quantity data obtained with the first sensor 21 is, for example, the vibration data of the reduction gear 14, and the physical quantity data obtained with the second sensor 22 is, for example, the shaft torque of the screw 11.

As depicted in FIG. 6, the model construction DB 52b may be configured to store the information on the life prediction model that is used for predicting the remaining life and not to store the information on the life prediction model that is not used for predicting the remaining life depending on the molding machine 1 and the component. Furthermore, the model construction DB 52b may be configured to store the entire information of the first to third life prediction models M1, M2, M3 trained with collectible physical quantity data regardless of whether they are suitable for transfer learning or fine-tuning. In addition, the model construction DB 52b may store the weight coefficients corresponding to the prediction accuracy of the first to third life prediction models M1, M2, M3 in association with the machine ID and the component ID. The weight coefficients are coefficients used to calculate the weighted average for the life prediction calculated using the first to third life prediction models M1, M2, M3.

### <Machine Learning Processing>

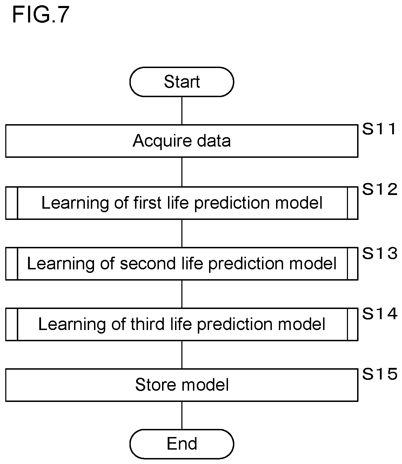

FIG. 7 is a flowchart depicting the learning processing procedure for the life prediction models. The processing unit 51 of the life prediction device 5 acquires physical quantity data related to the state of a component constituting the molding machine 1 from the data collection device 3 (step S11). The processing unit 51 stores the acquired physical quantity data in the collection data DB 52a.

Next, the processing unit 51 executes machine learning processing of the first life prediction model M1 based on the acquired physical quantity data (step S12). The processing unit 51 executes machine learning processing of the second life prediction model M2 based on the acquired physical quantity data (step S13). The processing unit 51 executes machine learning processing of the third life prediction model M3 based on the acquired physical quantity data (step S14).

Note that the processing unit 51 may be configured to selectively train the first to third life prediction models M1, M2, M3 depending on the component of the molding machine 1 as a subject of life prediction. For example, if the physical quantity data for machine learning is small, only the third life prediction model M3 may be trained, and if the physical quantity data are sufficiently accumulated, all the first to third life prediction models M1, M2 and M3 may be configured to be trained.

The processing unit 51, having finished training the first to third life prediction models M1, M2, M3, stores data used for constructing the trained first to third life prediction models M1, M2, M3 in the model construction DB 52b in association with the machine ID and the component ID respectively indicating the molding machine 1 and the component as a subject of life prediction (step S15).

The data used for constructing the trained first life prediction model M1 corresponds to, for example, the weight coefficients of the image recognition learning model 73. The data used for constructing the trained second life prediction model M2 corresponds to, for example, the coefficients of the state quantity estimation mathematical model 81 and the life estimation mathematical model 82. The data used for constructing the trained third life prediction model M3 corresponds to, for example, the coefficients of the life estimation function 92.

FIG. 8 is a conceptual diagram depicting the first life prediction model M1. The first life prediction model M1 includes a frequency analysis unit 71, an image generation unit 72 and the image recognition learning model 73. The frequency analysis unit 71 is an arithmetic processing unit that Fourier-transforms the time-series physical quantity data into the physical quantity data of the frequency component. The frequency analysis unit 71 may Fourier-transform the physical quantity data by Short-Time Fourier Transform (STFT). The image generation unit 72 is an arithmetic processing unit that converts the Fourier-transformed physical quantity data into the image data representing the physical quantity data with an image. For example, the physical quantity data may be represented on an image plane with the frequency on the horizontal axis and the frequency component on the vertical axis. An image obtained by Fourier-transforming physical quantity data is called a Fourier transform image.

The method of frequency analysis may employ, not limited to STFT, Wavelet Transformation, Stockwell Transform, Wigner distribution function, Empirical Mode Decomposition, Hilbert-Huang Transform or the like.

The image recognition learning model 73, which is a convolutional neural network (CNN), includes an input layer 73a to which image data of the Fourier transform image is input, an intermediate layer 73b and an output layer 73c that outputs remaining life data indicating the remaining life of the component.

The input layer 73a has multiple nodes to which the pixel values of the pixels constituting the Fourier transform image are input. The intermediate layer 73b is configured by alternately connecting convolutional layers for convolving pixel values of the pixels of the Fourier transform image input to the input layer 73a and pooling layers for mapping the pixel values convolved in the convolutional layer. The intermediate layer 73b extracts the features of the Fourier transform image while compressing the pixel information of the Fourier transform image, and outputs the extracted Fourier transform image, i.e., the features of the physical quantity data to the output layer 73c.

The output layer 73c has nodes that output the remaining life data indicating the remaining life of the component at the time when the physical quantity data is measured.

Note that the image recognition learning model 73 may employ CNN as an example, but may also be constructed by Multilayer perceptron (MLP), Convolutional Neural Network (CNN), Graph Neural Network (GNN), Graph Convolutional Network (GCN), Recurrent Neural Network (RNN), Long Short Term Memory (LSTM) and other neural network models. The first life prediction model M1 may also be constructed by employing algorithms such as decision trees, random forests and Support Vector Machine (SVM) or the like.

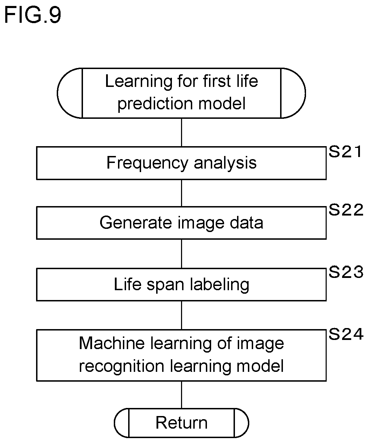

FIG. 9 is a flowchart depicting a learning processing procedure for the first life prediction model M1. The processing unit 51 performs frequency analysis on the time-series physical quantity data stored in the collection data DB 52a to convert the data into physical quantity data of a frequency component (step S21) and generates a Fourier transform image based on the Fourier-transformed physical quantity data (step S22). The processing unit 51 then labels the Fourier transform image with the remaining life of the component at the time when the physical quantity data from which the Fourier transform image originates was measured (step S23). Next, the processing unit 51 executes machine learning of the first life prediction model M1 while using the Fourier transform image labeled with the remaining life as learning data (training data) (step S24). The storage unit 52 stores the existing image recognition learning model 73, which is transfer-trained or fine-tuned, to thereby generate the first life prediction model M1 specific for prediction of the remaining life of a specific molding machine 1 and the component. More specifically, the processing unit 51 optimizes the weight coefficients of the image recognition learning model 73 by the error backpropagation method, the error gradient descent method or the like with the learning data to machine-train the image recognition learning model 73.

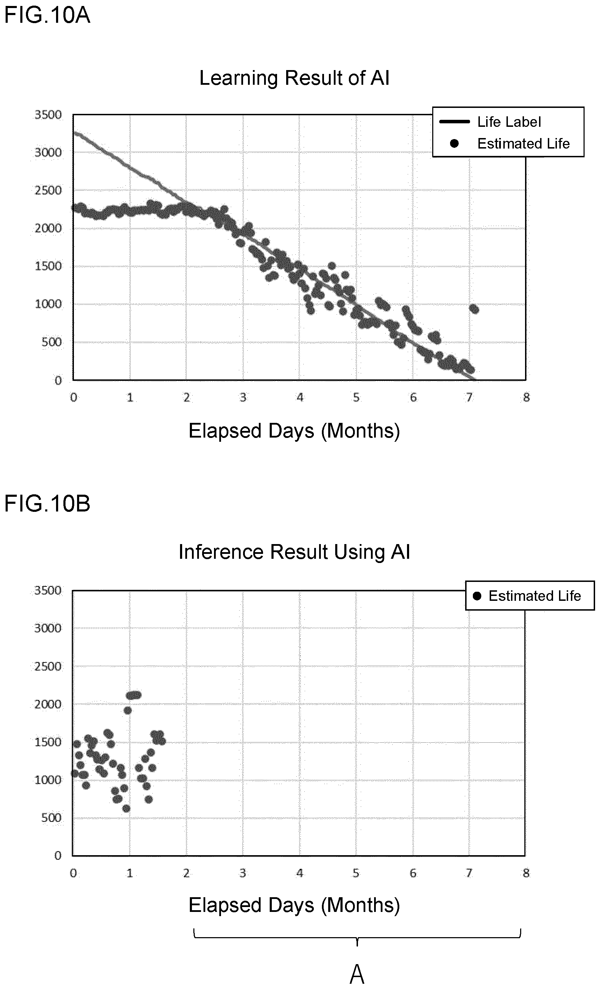

FIG. 10A is a graph depicting a learning result of the first life prediction model M1, while FIG. 10B is a graph depicting an inference result using the first life prediction model M1. The horizontal axes in FIG. 10A and FIG. 10B represent the elapsed days while the vertical axes represent the remaining life (estimated life). The component as a subject of life prediction is the gear or the bearing of the reduction gear 14, and the physical quantity is the vibration of the reduction gear 14, for example. Machine learning of the image recognition learning model 73 was performed with the learning data obtained during the period indicated in FIG. 10A (elapsed days of 0 to 7 months). The straight arrow indicates the labeled remaining life (life label). The plotted dots indicate the prediction results of the remaining life obtained by inputting the Fourier transform image as the learning data into the image recognition learning model 73. At the stage of learning, the results having a longer life than a certain period are judged to be unbreakable.

In FIG. 10B, the plotted dots at the left part (elapsed days of 0 to 2 months) indicate the prediction results of the remaining life (estimated life) obtained by inputting the Fourier transform image obtained from the molding machine 1 with a used component (short remaining life) into the image recognition learning model 73. In FIG. 10B, at the inference stage, the results that have the predicted remaining life longer than a certain level (e.g., the range A in FIG. 10B) are not displayed as plotted dots. FIG. 10A and FIG. 10B demonstrate that the remaining life of a component can be predicted using the trained image recognition learning model 73.

FIG. 11 is a conceptual diagram depicting the second life prediction model M2. The second life prediction model M2 includes the state quantity estimation mathematical model 81 and the life estimation mathematical model 82. The condition estimation model is a function that defines the relationship between multiple physical quantity data respectively indicating the multiple types of physical quantities that are detectable with the sensors 2 and state quantities other than the multiple physical quantities. The multiple physical quantities and other state quantities include, for example, the vibration of the reduction gear 14, the supply amount of a resin raw material, the motor current, the rotational speed of the screw 11, the type of a resin raw material, and the screw construction. The life estimation mathematical model 82 is a function for estimating the remaining life of a component of the molding machine 1 based on the physical quantity data and the physical quantity data estimated by the state quantity estimation mathematical model 81.

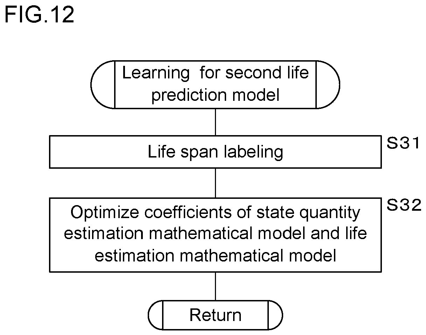

FIG. 12 is a flowchart depicting a learning processing procedure for the second life prediction model M2. The processing unit 51 labels the physical quantity data accumulated in the collection data DB 52a with the remaining life of the component at the time when the physical quantity data was measured (step S31). The processing unit 51 then optimizes the coefficients of the state quantity estimation mathematical model 81 and the life estimation mathematical model 82 using the physical quantity data labeled with the remaining life as learning data (step S32). The state quantity estimation mathematical model 81 and the life estimation mathematical model 82 can be expressed in regression equations. The processing unit 51 can optimize the coefficients of the mathematical models by Kernel Ridge regression, for example. The storage unit 52 stores the roughly-tuned state quantity estimation mathematical model 81 and life estimation mathematical model 82. The coefficients of the mathematical models are optimized to thereby generate the second life prediction model M2.

Note that the method of optimizing the coefficients of the state quantity estimation mathematical model 81 and the life estimation mathematical model 82 is not limited to the kernel ridge regression.

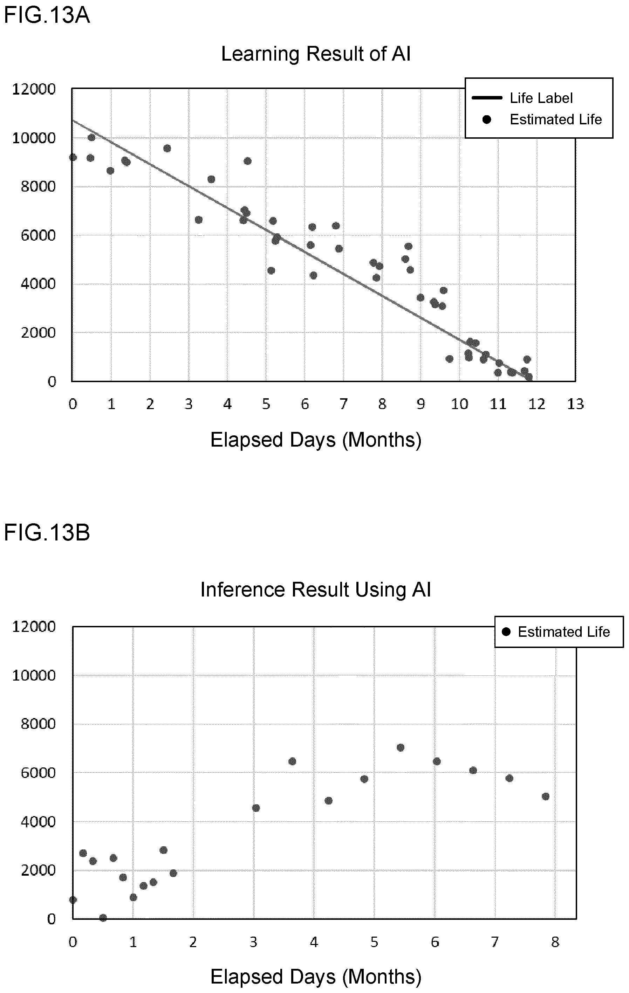

FIG. 13A is a graph depicting a learning result of the second life prediction model M2, while FIG. 13B is a graph depicting an inference result using the second life prediction model. The horizontal axes in FIG. 13A and FIG. 13B represent the elapsed days while the vertical axes represent the remaining life (estimated life). The component as a subject of life prediction is the gear or the bearing of the reduction gear 14, and the physical quantity is the vibration of the reduction gear 14, for example. Machine learning of the state quantity estimation mathematical model 81 and the life estimation mathematical model 82 was performed with the learning data obtained during the period (elapsed days of 0 to 12 months) indicated in FIG. 13A. The solid line indicates the labeled remaining life (life label). The plotted dots each indicate the remaining life predicted using the second life prediction model M2.

In FIG. 13B, the plotted dots in the rage during the period at the right part (elapsed days of 3 to 8 months) each indicate the remaining life predicted based on the RMS of the physical quantity data obtained from the molding machine 1 with a new component (having a long remaining life). In FIG. 13, the plotted dots in the rage of the period at the left part (0 to 2 months) each indicate the remaining life predicted based on the RMS of the physical quantity data obtained from the molding machine 1 with a used component (having a short remaining life). FIGs. 13A and 13B demonstrate that the remaining life of a component can be predicted using the trained state quantity estimation mathematical model 81 and life estimation mathematical model 82.

FIG. 14 is a conceptual diagram depicting the third life prediction model M3. The third life prediction model M3 includes an RMS calculation unit 91 and the life estimation function 92. The RMS calculation unit 91 is an arithmetic processing unit that calculates a root mean square value of the physical quantity data. The life estimation function 92 is a function for estimating the remaining life of a component of the molding machine 1 based on the RMS of the physical quantity data. The life estimation function 92 is a regression equation that represents the remaining life as a response variable with one or more explanatory variables.

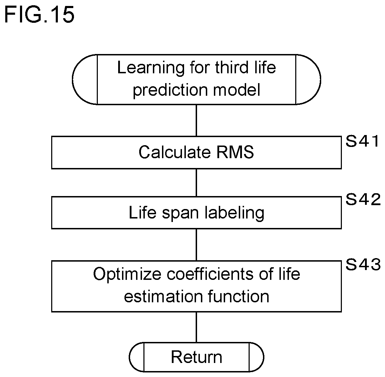

FIG. 15 is a flowchart depicting a learning processing procedure for the third life prediction model M3. The processing unit 51 calculates RMS of the physical quantity based on the physical quantity data accumulated in the collection data DB 52a (step S41) and labels the calculated RMS with the remaining life of the component at the time when the physical quantity data was measured (step S42). The processing unit 51 then optimizes the coefficients of the life estimation function 92 using the RMS labeled with the remaining life as learning data (step S43). The processing unit 51 can optimize the coefficients of the life estimation function 92 using Lasso Regression, for example. The storage unit 52 stores the life estimation function 92 roughly tuned in advance, and the coefficients of the life estimation function 92 are optimized to thereby generate the third life prediction model M3.

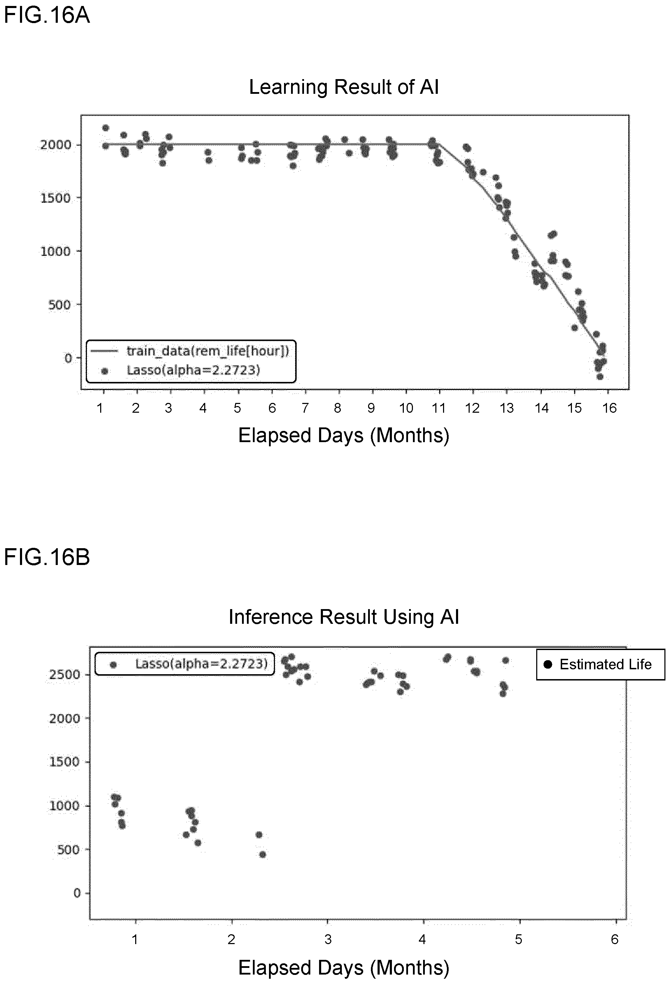

FIG. 16A is a graph depicting a learning result of the third life prediction model M3, while FIG. 16B is a graph depicting an inference result using the third life prediction model M3. The horizontal axes in FIG. 16A and FIG. 16B represent the elapsed days while the vertical axes represent the remaining life. The component to be predicted is the gear or the bearing of the reduction gear 14, and the physical quantity is the vibration of the reduction gear 14, for example. Machine learning of the life estimation function 92 was performed with the learning data obtained during the period indicated in FIG. 16A (elapsed days of 0 to 16 months). The solid line indicates the labeled remaining life. The plotted dots each indicate the remaining life predicted using the life estimation function 92.

In FIG. 16B, the plotted dots at the upper right each indicate the remaining life predicted based on the RMS of the physical quantity data obtained from the molding machine 1 with a new component (having a long remaining life). In FIG. 16B, the plotted dots at the lower left each indicate the remaining life predicted based on the RMS of the physical quantity data obtained from the molding machine 1 with a used component (having a short remaining life). FIGs. 16A and 16B demonstrate that the remaining life of a component can be predicted using the trained life estimation function 92.

### <Remaining Life Prediction>

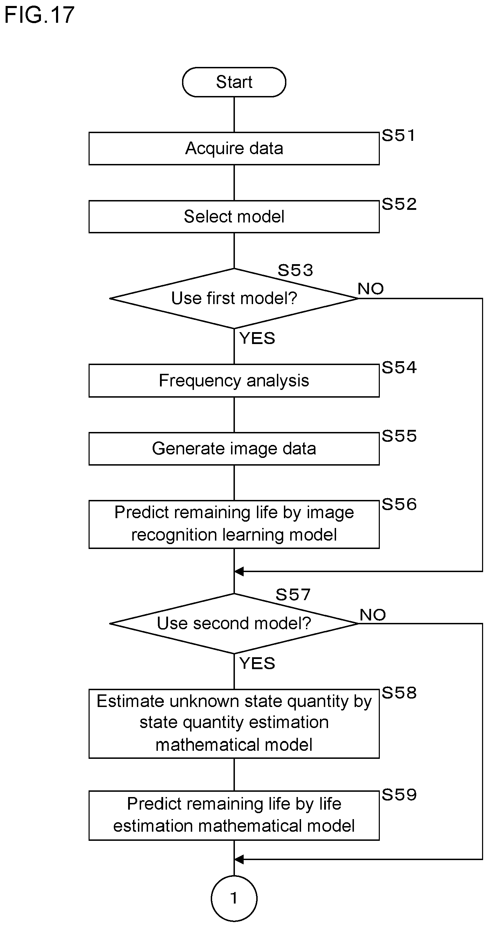

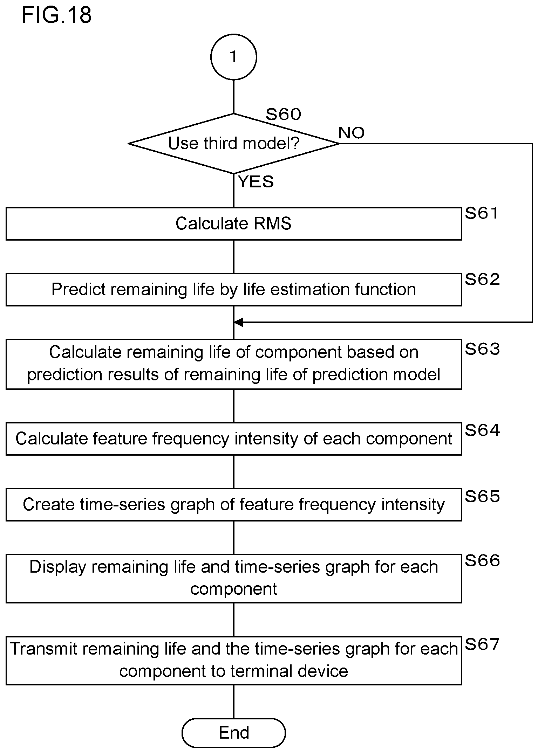

FIG. 17 and FIG. 18 are each a flowchart depicting a life prediction processing procedure. The processing unit 51 of the life prediction device 5 acquires physical quantity data from the data collection device 3 (step S51). The processing unit 51 then selects one or more life prediction models to be used for predicting a component for which life is to be predicted (step S52). More specifically, the processing unit 51 reads the life estimation mathematical model 82 associated with the machine ID and the component ID indicating the specific molding machine 1 and the component from the model construction DB 52b.

The processing unit 51 determines whether or not the first life prediction model M1 is to be used (step S53). If determining that the first life prediction model M1 is to be used (step S53: YES), the processing unit 51 performs frequency analysis on the acquired time-series physical quantity data to convert the data into physical quantity of a frequency component (step S54) and generates image data of the Fourier transform image based on the Fourier-transformed physical quantity data (step S55). The processing unit 51 then inputs the generated image data of the Fourier transform image to the image recognition learning model 73 to predict the remaining life of the component (step S56).

If completing the processing at step S56, or if determining that the first life prediction model M1 is not to be used at step S53 (step S53: NO), the processing unit 51 determines whether or not the second life prediction model M2 is to be used (step S57). If determining that the second life prediction model M2 is to be used (step S57: YES), the processing unit 51 estimates an unknown state quantity by substituting the acquired physical quantity data into the state quantity estimation mathematical model 81 (step S58). Next, the processing unit 51 predicts the remaining life of the component by substituting the acquired physical quantity data and the calculated unknown state quantity into the life estimation mathematical model 82 (step S59).

If completing the processing at step S59, or if determining that the second life prediction model M2 is not to be used at step S57 (step S57: NO), the processing unit 51 determines whether or not the third life prediction model M3 is to be used (step S60). If determining that the third life prediction model M3 is to be used (step S60: YES), the processing unit 51 calculates RMS of the physical quantity based on the acquired physical quantity data (step S61). The processing unit 51 then substitutes the calculated RMS of the physical quantity data into the life estimation function 92 to predict the remaining life of the component (step S62).

If completing the processing at step S62, or if determining that the third life prediction model M3 is not to be used at step S60 (step S60: NO), the processing unit 51 calculates the remaining life of the component based on the employed first to third life estimation models (step S63). For example, the processing unit 51 calculates the minimum, mean value, median and weighted mean value of the remaining lives calculated by the first to third life estimation models.

The weighting coefficient used for the weighted mean value may arbitrarily be set by the user, or may be set according to feedback information on the life prediction accuracy in the past (e.g., the difference between the calculated remaining life and the actual remaining life). The processing unit 51 may further select the remaining life calculated by one life prediction model selected by the user. The processing unit 51 may calculate the minimum, mean value, median and weighted mean value of the remaining lives calculated by multiple life prediction models selected by the user.

Next, the processing unit 51 calculates a feature frequency intensity representing the feature at each of the time points for each component constituting the molding machine 1 based on the acquired time-series physical quantity data (step S64). The processing unit 51 then creates a time-series graph of the calculated feature frequency intensities (step S65). The time-series graph depicts the time-series feature frequency intensities calculated as above, with the time on the horizontal axis and the feature frequency intensity on the vertical axis.

The processing unit 51 then executes display processing of the remaining life and the time-series graph for each component constituting the molding machine 1 (step S66). The processing unit 51 displays the remaining life and the time-series graph of each of the components on a portal site where the condition of each mold machine 1 possessed by the user can be viewed with a browser.

Moreover, the processing unit 51 transmits the data of the calculated remaining life and time-series graph of each of the components constituting the molding machine 1 to the terminal devices 6a and 6b (step S67). For example, the processing unit 51 transmits the data of the remaining life and the time-series graph to the terminal device 6a of the user or the operator of the molding machine 1 and the terminal device 6b of the service representative associated with the molding machine 1 of the user.

The life prediction device 5 according to the present embodiment provides a portal site where the remaining lives of the multiple molding machines 1 and components and a time-series graph of the physical quantity related to the condition of each of the components of the molding machine 1 can be viewed. The life prediction device 5 according to the present embodiment manages the conditions of the molding machines 1 respectively possessed by multiple users. Each of the users accesses the portal site with the browser to view and check the condition of the molding machine 1 possessed by the user. In addition, the service representative associated with the molding machine 1 and the component accesses the portal site with the browser to view and check the user in charge or the condition of the molding machine 1.

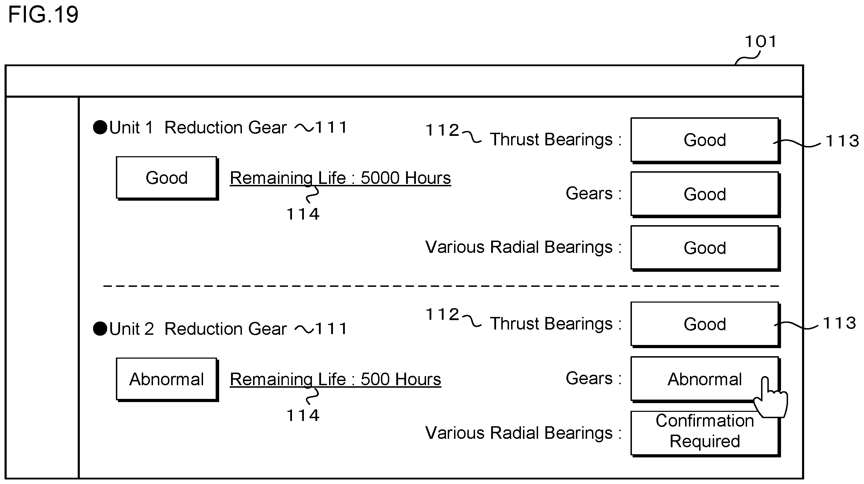

FIG. 19 is a schematic diagram depicting one example of a remaining life estimation result display screen 101 displayed on the portal site. The remaining life estimation result display screen 101 has a machine name display section 111 that displays the name of each of the multiple molding machines 1 possessed or used by the user and a component name display section 112 that displays the name of each of the components constituting each of the molding machines 1. The remaining life estimation result display screen 101 has a component condition display section 113 that displays the condition of each of the components, especially, the condition based on the remaining life. The component condition display section 113 displays the condition of each of the components by displaying icons such as "good," "confirmation required" and "abnormal." In the case where any of the icons in the component condition display section 113 is operated, the processing unit 51 displays a time-series graph of the physical quantity related to the condition of the component. In addition, the remaining life estimation result display screen 101 has a remaining life display section 114 that displays the remaining life of an abnormal component. The processing unit 51 displays the remaining life of the component calculated by the aforementioned processing.

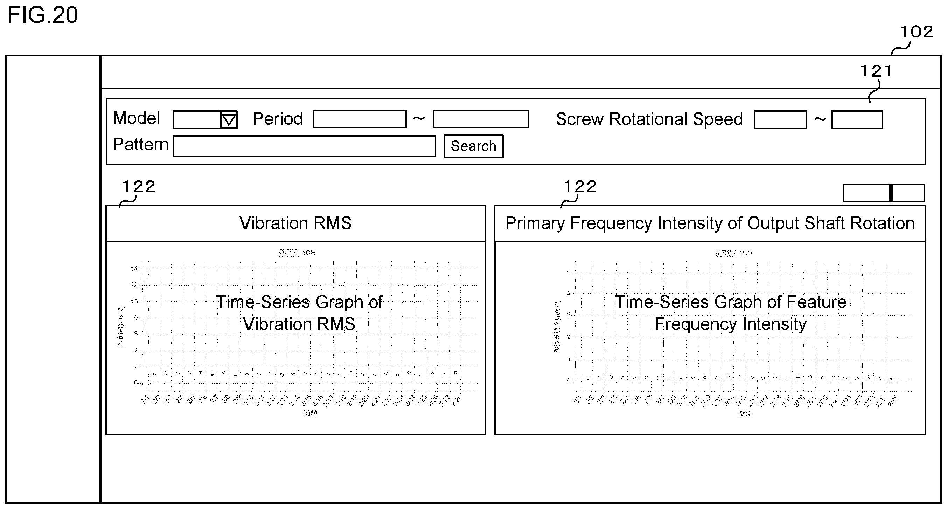

FIG. 20 is a schematic diagram depicting one example of a dashboard screen 102 displayed on the portal site. The dashboard screen 102 is a screen that displays time-series graphs of one or more representative physical quantity data indicating the condition of the molding machine 1. The dashboard screen 102 has a display operation part 121 for designating the molding machine 1 and the period to be displayed and a time-series graph display part 122. The display operation part 121 contains, for example, a model designation section for designating a model of the molding machine 1, a period designation section for designating a display period, a screw rotational speed designation section for designating a screw rotational speed, a pattern display section for designating the display pattern of a graph to be displayed on the dashboard, and a search button.

The user can pre-set the display pattern, and the life prediction device 5 stores the set display pattern. The display pattern includes information such as a model ID of the molding machine 1, a display pattern name, a category of a component to be displayed, and data items to be graphically displayed. The category of a component includes the reduction gear 14, the shaft device or the like.

The data item includes operating information data, frequency analysis data, torque analysis data and twine screw correlation data. The operating information data includes, for example, a screw rotational speed, motor current, a tip end pressure of the screw and a die head pressure. The frequency analysis data includes vibration RMS, rotational frequency intensity, gear engagement frequency intensity and bearing failure frequency intensity, while the torque analysis data includes the mean value and maximum of the torque of the screw 11 as well as the mean value and maximum of the torque amplitude, and the main frequency. The twin screw correlation data includes the phase difference between the two screws 11 for the twin-screw extruder.

The processing unit 51 receives the information input to the display operation part 121, and, if receiving an operation input to the search button, reads the physical quantity data corresponding to the received information from the collection data DB 52a and creates a time-series graph of the read physical quantity data. The time-series graph display part 122 displays the time-series graph of physical quantity data according to the model, period, screw rotational speed and display pattern designated in the display operation part 121.

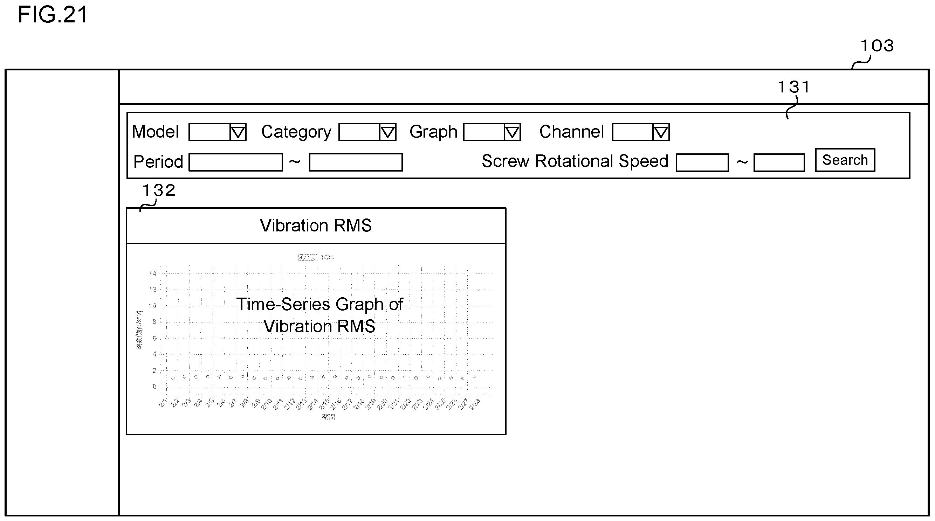

FIG. 21 is a schematic diagram depicting an example of a search display screen 103 displayed on the portal site. The search display screen 103 has a search operation part 131 for searching for a time-series graph and a time-series graph display part 132 for displaying the searched time-series graph. The search operation part 131 contains, for example, a search button and entry items for designating the model of the molding machine 1 to be searched and displayed, the category of the component, the graph (data item), the channel of the sensor 2, the period and the screw rotational speed.

The processing unit 51 receives the information input to the search operation part 131 and, if receiving the operation input to the search button, reads the physical quantity data corresponding to the received information from the collection data DB 52a and creates a time-series graph of the read physical quantity data. The time-series graph display part 132 displays a time-series graph of the physical quantity data searched and created.

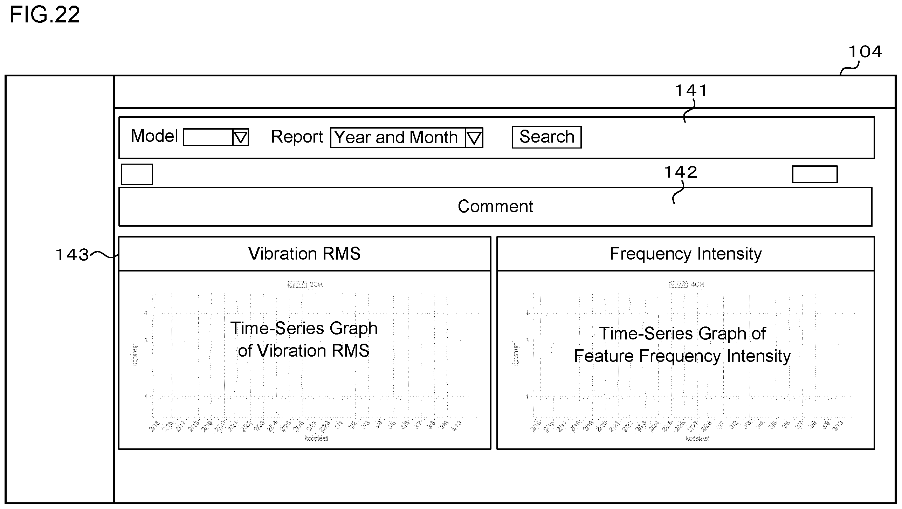

FIG. 22 is a schematic diagram depicting an example of a monthly report screen 104 displayed on the portal site. The monthly report screen 104 is a screen that displays a monitoring report created by the service representative of the molding machine 1. The monthly report screen 104 has a report search part 141 for searching for a report, a comment display part 142 and a time-series graph display part 143.

The report search part 141 contains a search button and items for designating the model of the molding machine 1 and the report issuance month and year. The comment display part 142 displays a comment on the condition of the molding machine 1 input by the service representative. The service representative accesses the portal site to check each types of the time-series graph related to the condition of the molding machine 1 and the component as well as the remaining life of each of the components, creates a comment on the condition of the molding machine 1 based on the viewed information, and transmits it to the life prediction device 5. The life prediction device 5 stores the comment in association with the machine ID and the report issuance year and month. The time-series graph display part 143 displays a representative time-series graph depicting the condition of the molding machine 1. The service representative of the molding machine 1 can select and designate the time-series graph to be displayed in the monthly report. The life prediction device 5 stores the comment in association with the machine ID and the report issuance year and month.

The processing unit 51 accepts the information input to the report search part 141 by the user and, if receiving operation input to the operation button, reads the comment and physical quantity data corresponding to the received information and creates a time-series graph based on the physical quantity data. The time-series graph display part 143 displays the time-series graph of the searched and created physical quantity data.

According to the life prediction method or the like of the present embodiment as described above, regardless of the amount of data that can be collected for the life prediction of a component constituting the molding machine 1, machine learning for life prediction can be performed to predict the life of the component.

In addition, the life prediction device 5 machine-trains the image recognition learning model 73 to predict the remaining life of a component constituting the molding machine 1. The life prediction device 5 machine-trains the state quantity estimation mathematical model 81 and the life estimation mathematical model 82 to predict the remaining life of the component constituting the molding machine 1. The life prediction device 5 machine-trains the life estimation function 92 to predict the remaining life of the component constituting the molding machine 1. The life prediction device 5 machine-trains the combination of these life prediction models according to the acquired learning data to predict the remaining life of the component constituting the molding machine 1.

The life prediction device 5 collects multiple types of physical quantity data, and can machine-train the first to third life prediction models M1, M2, and M3 by selecting or combining any physical quantity data and predict the remaining life of a component constituting the molding machine 1.

The life prediction device 5 can predict the remaining life of a component by a combination of the life prediction model that predicts the remaining life of a component based on the physical quantity data obtained by measurement for a short time period and the life prediction model that predicts the remaining life of a component based on the physical quantity data obtained by measurement for a long time period.

The life prediction device 5 uses a life prediction model that predicts the remaining life of a predetermined component constituting the molding machine 1 based on physical quantity data obtained by measuring a physical quantity of a first part related to the component in combination with a life prediction model that predicts the remaining life of the predetermined component based on physical quantity data obtained by measuring a physical quantity of a second part related to the component.

The life prediction device 5 can predict the remaining life of a component related to an extruder including the reduction gear 14, the screw 11, the motor 13 and the die 12 constituting the molding machine 1 using the physical quantity data for the reduction gear 14, the physical quantity data for the screw 11, the physical quantity data for the motor 13 and the physical quantity data for the die 12.

The life prediction device 5 can predict the remaining life of the reduction gear 14 by a combination of a life prediction model that predicts the remaining life of the reduction gear 14 based on the physical quantity data for the reduction gear 14 and a life prediction model that predicts the remaining life of the reduction gear 14 based on the physical quantity data for the screw 11. In other words, in predicting the remaining life of the reduction gear 14, the use of different types of physical quantity data or physical quantity data measured at different parts can improve the life prediction accuracy. The life prediction accuracy can further be improved by selecting different life prediction models suitable for different types of physical quantity data or physical quantity data measured at different parts and using the multiple types of physical quantity data and life prediction models.

The life prediction device 5 can improve the prediction accuracy of the life by calculating the minimum, mean value, median and weighted mean value of the lives of components of the molding machine 1 estimated by using the multiple life prediction models.

The life prediction device 5 can store different life prediction models corresponding to different molding machines 1 and components. This means that combinations of life prediction models that are suitable for different molding machines 1 and components can be stored. In addition, a life prediction model specific for each of the different molding machines and components can be stored. The life prediction device 5 can predict the remaining life of the component by using one or more life prediction models suitable for each of the different molding machines and components.

The life prediction device 5 can display the prediction result of the remaining life of a component constituting the molding machine 1 and the time-series graph of the physical quantity data, on the portal site.

The life prediction device 5 can transmit the prediction result of the remaining life of a component constituting the molding machine 1 and the time-series graph of the physical quantity data to the terminal device 6a of the user and the terminal device 6b of the service representative.

Though an example where the remaining life of a component constituting the molding machine 1 is described in the present embodiment, an abnormality degree of the component may be estimated likewise. If the first to third life prediction models M1, M2, M3 are trained with an abnormality instead of the remaining life, the abnormality of the component can be estimated as in the present embodiment.

The quality of a molding product produced by the molding machine 1 may be estimated. Due to the change in condition of a component constituting the molding machine 1, abnormality in the quality of the molding product may occur. For example, wear on the screw piece may cause an unmelted molding product. The quality of a molding product is assumed as a continuous quantity indicating the degree of quality. If the first to third life prediction models M1, M2, M3 are trained with the quality of a molding product instead of the remaining life, the quality of the molding product can be estimated as in the present embodiment.

### Clause 1

An estimation method comprising:
acquiring physical quantity data related to a condition of a component constituting a molding machine;
preparing a plurality of estimation models that each estimate a life or an abnormality degree of the component, or quality of a molding product using different algorithms; and
estimating a life or an abnormality degree of the component, or quality of a molding product based on the acquired physical quantity data by using one or more of the estimation models selected from the plurality of estimation models.

### Clause 2

The estimation method according to clause 1, wherein
the plurality of estimation models
include a learning model that outputs data indicating a life or an abnormality degree of the component, or quality of a molding product if image data generated from the physical quantity data is input, and
estimate a life or an abnormality degree of the component, or quality of a molding product by inputting image data generated from the acquired physical quantity data to the learning model.

### Clause 3

The estimation method according to clause 1 or 2, wherein
the physical quantity data includes physical quantity data indicating a plurality types of physical quantities,
the plurality of estimation models
include a mathematical model indicating a relationship among the physical quantity data of the plurality types of the physical quantities, a state quantity other than the plurality of types of physical quantities and a life or an abnormality degree of the component, or quality of a molding product, and
estimate a life or an abnormality degree of the component, or quality of a molding product by substituting the acquired physical quantity data into the one or a plurality of mathematical models.

### Clause 4

The estimation method according to any one of clauses 1 to 3, wherein
the plurality of estimation models
include a regression equation having one or a plurality of explanatory variables and indicating a relationship between the physical quantity data and a life or an abnormality degree of the component, or quality of a molding product, and
estimate a life or an abnormality degree of the component, or quality of a molding product by substituting the acquired physical quantity data to the regression equation.

### Clause 5

The estimation method according to any one of clauses 1 to 4, wherein
the physical quantity data includes physical quantity data indicating a plurality of types of physical quantities,
the plurality of estimation models include
a learning model that outputs data indicating a life or an abnormality degree of the component, or quality of a molding product if image data generated from the physical quantity data is input,
a mathematical model indicating a relationship among the physical quantity data of the plurality types of the physical quantities, a state quantity other than the plurality of types of physical quantities and a life or an abnormality degree of the component, or quality of a molding product, and
a regression equation having one or a plurality of explanatory variables and indicating a relationship between the physical quantity data and a life or an abnormality degree of the component, or quality of a molding product,
the plurality of estimation models estimating a life or an abnormality degree of the component, or quality of a molding product by inputting image data generated from the acquired physical quantity data to the learning model, substituting the acquired physical quantity data to the mathematical model, and substituting the acquired physical quantity data to the regression equation.

### Clause 6

The estimation method according to any one of clauses 1 to 5, wherein
the plurality of estimation models include
an estimation model that estimates a life or an abnormality degree of the component, or quality of a molding product based on the physical quantity data obtained by measurement for a short time period, and
an estimation model that estimates a life or an abnormality degree of the component, or quality of a molding product based on the physical quantity data obtained by measurement for a long time period.

### Clause 7

The estimation method according to any one of clauses 1 to 6, wherein
the plurality of estimation models include
an estimation model that estimates a life or an abnormality degree of the component, or quality of a molding product based on physical quantity data obtained by measuring a physical quantity of a first part related to the component, and
an estimation model that estimates a life or an abnormality degree of the component, or quality of a molding product based on physical quantity data obtained by measuring a physical quantity of a second part related to the component.

### Clause 8

The estimation method according to any one of clauses 1 to 7, wherein
the molding machine is an extruder including a reduction gear, a screw, a motor and a die, and
the physical quantity data includes physical quantity data related to the reduction gear, physical quantity data related to the screw, physical quantity data related to the motor or physical quantity data related to the die.

### Clause 9

The estimation method according to any one of clauses 1 to 8, wherein
the plurality of estimation models include
an estimation model that estimates a life or an abnormality degree of the reduction gear, or quality of a molding product based on physical quantity data related to the reduction gear, and
an estimation model that estimates a life or an abnormality degree of the reduction gear, or quality of a molding product based on physical quantity data related to the screw.

### Clause 10

The estimation method according to any one of clauses 1 to 9, further comprising calculating a minimum, a mean value, a median or a weighted mean value of a life or an abnormality degree of the component that is estimated using the plurality of estimation models, or quality of a molding product.

### Clause 11

The estimation method according to any one of clauses 1 to 10, wherein a machine identifier indicating each of a plurality of the molding machines, a component identifier indicating the component constituting the molding machine, and the one or the plurality of the estimation models used for estimating a life or an abnormality degree of the component, or quality of a molding product are stored in association with each other.

### Clause 12

The estimation method according to any one of clauses 1 to 11, wherein information indicating the estimated life or abnormality of the component, or quality of a molding product is provided in a displayable manner.

### Clause 13

The estimation method according to any one of clauses 1 to 12, wherein information indicating the estimated life or abnormality of the component, or quality of a molding product is transmitted to a terminal device.

### Reference Signs List

1 molding machine
2 sensor
3 data collection device
4 router
5 life prediction device
6a terminal device
6b terminal device
10 cylinder
10a hopper
11 screw
12 die
13 motor
14 reduction gear
15 control device
21 first sensor
22 second sensor
23 third sensor
24 fourth sensor
31 control unit
32 storage unit
33 communication unit
34 data input unit
50 recording medium
51 processing unit
52 storage unit
53 communication unit
71 frequency analysis unit
72 image generation unit
73 image recognition learning model
73a input layer
73b intermediate layer
73c output layer
81 state quantity estimation mathematical model
82 life estimation mathematical model
91 RMS calculation unit
92 life estimation function
101 remaining life estimation result display screen
102 dashboard screen
103 search display screen
104 monthly report screen
52a collection data DB
52b model construction DB
M1 first life prediction model
M2 second life prediction model
M3 third life prediction model
P computer program

## Claims

1. An estimation method comprising:
acquiring physical quantity data related to a condition of a component constituting a molding machine;
preparing a plurality of estimation models that each estimate a life or an abnormality degree of the component, or quality of a molding product using different algorithms; and
estimating a life or an abnormality degree of the component, or quality of a molding product based on the acquired physical quantity data by using one or more of the estimation models selected from the plurality of estimation models.

2. The estimation method according to claim 1, wherein
the plurality of estimation models
include a learning model that outputs data indicating a life or an abnormality degree of the component, or quality of a molding product if image data generated from the physical quantity data is input, and
estimate a life or an abnormality degree of the component, or quality of a molding product by inputting image data generated from the acquired physical quantity data to the learning model.

3. The estimation method according to claim 1, wherein
the physical quantity data includes physical quantity data indicating a plurality types of physical quantities,
the plurality of estimation models
include a mathematical model indicating a relationship among the physical quantity data of the plurality types of the physical quantities, a state quantity other than the plurality of types of physical quantities and a life or an abnormality degree of the component, or quality of a molding product, and
estimate a life or an abnormality degree of the component, or quality of a molding product by substituting the acquired physical quantity data into the one or a plurality of mathematical models.

4. The estimation method according to claim 1, wherein
the plurality of estimation models
include a regression equation having one or a plurality of explanatory variables and indicating a relationship between the physical quantity data and a life or an abnormality degree of the component, or quality of a molding product, and
estimate a life or an abnormality degree of the component, or quality of a molding product by substituting the acquired physical quantity data to the regression equation.

5. The estimation method according to claim 1, wherein
the physical quantity data includes physical quantity data indicating a plurality of types of physical quantities,
the plurality of estimation models include
a learning model that outputs data indicating a life or an abnormality degree of the component, or quality of a molding product if image data generated from the physical quantity data is input,
a mathematical model indicating a relationship among the physical quantity data of the plurality types of the physical quantities, a state quantity other than the plurality of types of physical quantities and a life or an abnormality degree of the component, or quality of a molding product, and
a regression equation having one or a plurality of explanatory variables and indicating a relationship between the physical quantity data and a life or an abnormality degree of the component, or quality of a molding product,
the plurality of estimation models estimating a life or an abnormality degree of the component, or quality of a molding product by inputting image data generated from the acquired physical quantity data to the learning model, substituting the acquired physical quantity data to the mathematical model, and substituting the acquired physical quantity data to the regression equation.

6. The estimation method according to any one of claims 1 to 5, wherein
the plurality of estimation models include
an estimation model that estimates a life or an abnormality degree of the component, or quality of a molding product based on the physical quantity data obtained by measurement for a short time period, and
an estimation model that estimates a life or an abnormality degree of the component, or quality of a molding product based on the physical quantity data obtained by measurement for a long time period.

7. The estimation method according to any one of claims 1 to 5, wherein
the plurality of estimation models include
an estimation model that estimates a life or an abnormality degree of the component, or quality of a molding product based on physical quantity data obtained by measuring a physical quantity of a first part related to the component, and
an estimation model that estimates a life or an abnormality degree of the component, or quality of a molding product based on physical quantity data obtained by measuring a physical quantity of a second part related to the component.

8. The estimation method according to any one of claims 1 to 5, wherein
the molding machine is an extruder including a reduction gear, a screw, a motor and a die, and
the physical quantity data includes physical quantity data related to the reduction gear, physical quantity data related to the screw, physical quantity data related to the motor or physical quantity data related to the die.

9. The estimation method according to claim 8, wherein
the plurality of estimation models include
an estimation model that estimates a life or an abnormality degree of the reduction gear, or quality of a molding product based on physical quantity data related to the reduction gear, and
an estimation model that estimates a life or an abnormality degree of the reduction gear, or quality of a molding product based on physical quantity data related to the screw.

10. The estimation method according to any one of claims 1 to 5, further comprising calculating a minimum, a mean value, a median or a weighted mean value of a life or an abnormality degree of the component that is estimated using the plurality of estimation models, or quality of a molding product.

11. The estimation method according to any one of claims 1 to 5, wherein a machine identifier indicating each of a plurality of the molding machines, a component identifier indicating the component constituting the molding machine, and the one or the plurality of the estimation models used for estimating a life or an abnormality degree of the component, or quality of a molding product are stored in association with each other.

12. The estimation method according to any one of claims 1 to 5, wherein information indicating the estimated life or abnormality of the component, or quality of a molding product is provided in a displayable manner.

13. The estimation method according to any one of claims 1 to 5, wherein information indicating the estimated life or abnormality of the component, or quality of a molding product is transmitted to a terminal device.

14. An estimation device, comprising:
an acquisition unit that acquires physical quantity data related to a condition of a component constituting a molding machine;
a plurality of estimation models that each estimate a life or an abnormality degree of the component, or quality of a molding product using different algorithms; and
a processing unit that estimates a life or an abnormality degree of the component, or quality of a molding product based on the physical quantity data acquired by the acquisition unit by using one or more of the estimation models selected from the plurality of estimation models.

15. A computer program causing a computer to execute processing of:
acquiring physical quantity data related to a condition of a component constituting a molding machine; and
estimating a life or an abnormality degree of the component, or quality of a molding product based on the acquired physical quantity data by using one or more estimation models selected from a plurality of estimation models that estimate a life or an abnormality degree of the component, or quality of a molding product using different algorithms.
